# EUROPEAN PATENT SPECIFICATION

(11) **EP 3 572 720 B1**
(45) Date of publication and mention of the grant of the patent: **09.11.2022**
(21) Application number: 19172728.8
(22) Date of filing: 06.05.2019
(51) Int. Cl.: F21S 41/365, F21S 43/31, F21S 43/14

(54) **LIGHTING MODULE FOR A VEHICLE**
LICHTMODUL FÜR EIN FAHRZEUG
MODULE LUMINEUX POUR VÉHICULE

(30) Priority: 24.05.2018 ES 201830501
(43) Date of publication of application: 27.11.2019
(73) Proprietor: Seat, S.A., 08760 Martorell (ES)
(72) Inventor: BENDAÑA SUEIRO, Xesús Manoel, 08760 MARTORELL (ES); PIQUÉ COSCONERA, Xavier, 08760 MARTORELL (ES); CORULL MASSANA, Ernest, 08760 MARTORELL (ES); PUIGDELLIVOL GUIXE, Ferran, 08760 MARTORELL (ES)
(74) Representative: Ponti & Partners, S.L.P

(56) References cited:
- EP-A1- 1 978 297
- EP-A1- 2 295 850
- WO-A1-2016/094913
- DE-A1-102012 220 455

## Description

The present invention relates to a lighting module for a vehicle, which is compact and with a reduced number of parts.

### Background of the invention

Different lighting modules are used in vehicles to perform different required lighting functions, e.g. the rear position lights, which allow giving visibility backwards when driving in low-light conditions.

This signalling is typically performed in the two rear lights and, additionally, as design trend, also with a straight and elongated strip situated centrally in the rear part of the vehicle. In this way, it lights in red a surface of the vehicle, which goes from the light placed on the left side of the vehicle to the light placed on the right side of the vehicle. For this application, it requires that the light is very homogeneous, having a very compact and reduced space.

With the aim of achieving a high homogeneity, there are different methods such as using light guides with diffusor elements at the end or making the light hit various surfaces, causing a reflection of the light beams in all directions, achieving light homogeneity.

The existing problem in vehicles lies in the space of volume available to generate these functions. In the example of the aforementioned signalling function, there is not sufficient space to place all the necessary optical parts in addition to the required electronics.

Increasing the size of this lighting module has a negative impact on the design and/or on the environment. In the example of signalling function indicated above, an increase in the volume required to generate the rear position light causes a reduction in the volume of the boot or introduces strange geometries in both in the boot, difficult to obtain by inlaying processes, and in the lighting module, protruding from the volume of the vehicle. The addition of optical surfaces, in addition to causing the increase in size, requires more parts, which increases the complexity of the system and its cost. Furthermore, increasing the number of light sources (LED) has a direct impact on the cost. DE 10 2012 22 04 55 discloses a known lighting module according to the preamble of appended claim 1.

Therefore, one purpose of the present invention is to provide a lighting module of a vehicle which is compact and less complex than the conventional lighting modules, reducing the number of parts and allowing a better electronic integration.

### Description of the invention

The lighting module of the invention manages to resolve the cited drawbacks, presenting other advantages that will be described below.

The lighting module for a vehicle according to the present invention comprises:
- at least one light emitter;
- at least one printed circuit board, where the at least one light emitter is connected to the at least one printed circuit board;
- an output surface of the light generated by the at least one light emitter;
- a first reflection surface and a second reflection surface, where the first reflection surface is configured to reflect a light emitted by the at least one light emitter towards the second reflection surface, and where the second reflection surface is configured to reflect the light from the first reflection surface towards the output surface,
wherein the at least one printed circuit board comprises the second reflection surface.

It should be indicated that output surface is understood as an outer lens or outer covering of the lighting module, wherethrough the light exits the lighting module. It is therefore an area of the outer covering of the lighting module designed to allow the extraction of light beams that generate a certain lighting function. It is, therefore, a partially transparent element, which may be of a certain colour, e.g. red, to give the signalling function the required chromatic properties.

Furthermore, the printed circuit board is where the one or more light emitters and the electronic components required for execution of the signalling function are connected, thus being a typical component in lighting modules.

The lighting module of the present invention is configured so that it substantially produces a first reflection of the light on the first reflection surface and a second reflection of the light on the second reflection surface. Advantageously, the second reflection is produced on the printed circuit board, not requiring additional elements.

In the supposed case that the at least one light emitter emitted the light directly towards the output surface, an external observer would see a non-homogeneous distribution of the light beams. Thus, areas of high light intensity and areas of low light intensity would be observed, giving a sensation of low quality. The two reflection surfaces allow extending the distance between the light emitter and the output surface, allowing opening the cone of light emitted by the light emitter and achieving homogeneity in the light extracted through the output surface.

Advantageously, the second reflection surface is a surface of the printed circuit board. Thus, in the lighting module of the present invention, it is the printed circuit board itself that comprises the second reflection surface, with no additional elements being necessary for said second reflection surface, improving the package of the assembly.

Furthermore, the surface of the printed circuit board is substantially flat, where the surface of the printed circuit board extends in a plane substantially perpendicular to the light emission direction.

According to a preferred embodiment, the surface of the printed circuit board is white. Using a white printed circuit board generates a highly efficient diffuse reflection as it reflects almost all the light that impacts against said surface. In contrast, and in a manner which is harmful for the achievement of the present invention, a dark-coloured printed circuit board absorbs the incident light beams, reducing the energy efficiency of the lighting module. It should be indicated that the entire circuit may be white, thus improving the internal reflection that occurs within the lighting module.

The surface of the printed circuit board preferably comprises a plurality of grooves, and they have an optical function to open the light field or beam reflected towards the output surface. Preferably, said grooves are substantially parallel to one another, so that they allow opening the light beam or light distribution field in a certain direction. According to a preferred embodiment, the grooves are disposed in a substantially parallel direction, so that they contribute to opening the light field in the horizontal direction. Horizontal direction is understood as the direction perpendicular to the direction of movement of the vehicle.

It is important to highlight that the use of a printed circuit board comprising electronics on both faces is beneficial. On the rear surface it will have all the circuitry. On the front surface it will have at least one light emitted and refrigeration elements, trying to leave free the maximum surface so that the second reflection occurs.

Preferably, the at least one light emitter is disposed in a first area of the printed circuit board close to the first reflection surface, and the grooves are disposed in a second area of the printed circuit board close to the output surface of the lighting module, specifically on the surface of the printed circuit board.

It is stressed that a groove is generated by the imbalance or difference in height existing between two copper plates, where the copper plates allow conducting the electricity to the electrical consumers disposed on the printed circuit board. If the copper plates are disposed parallel to one another and with a minimum separation space between them, a channel or groove is generated with allows performing an optical function.

According to the invention, the first reflection surface is facing said at least one light emitter, where the first reflection surface is substantially concave. As previously explained, the white surface finish minimizes the light absorption, improving the internal reflection in the lighting module. The concave geometry of the first reflection surface is configured to correctly direct the light beams towards the second reflection surface.

Furthermore, said first reflection surface is of a substantially matt finish. It may additionally comprise an irregular surface finish, generated by a granite or striations with the purpose of generating optical noise in the light beams reflected by the first surface, which favours achieving a dispersion of the light beams that improve the homogeneity of the light emitted. Furthermore, the lighting module comprises a diffuser disposed between the second reflection surface and the output surface.

Said diffuser is configured to divert the light beams in all directions, e.g. by means of cuts, granite/optical surfaces, etc. increasing the degree of homogeneity of the light extracted through the output surface, e.g. of PMMA DF23 material.

According to a preferred embodiment, the distance between the at least one light emitter and the diffuser is of between 10 and 25 mm in the output direction of the light from the lighting module, with said distance or separation between the at least one light emitter and the diffuser being minimum in order to open the light beams emitted by the at least one light emitter. Furthermore, the lighting module comprises a mask suitable for blocking a portion of the light generated by the at least one light emitter, so that the light generated by the at least one light emitter exits the lighting module through the diffuser and, later, through the output surface. Preferably, the first reflection surface is joined to the mask, and the first reflection surface may be obtained by means of an overpressing process.

According to the invention, the lighting module comprises a plurality of light emitters disposed substantially aligned in the printed circuit board along a first direction, where the first reflection surface, the second reflection surface and the output surface extend in the first direction. The first direction is substantially perpendicular to the output direction of the light reflected on the second reflection surface, and is also perpendicular to the main light emission direction of the plurality of light emitters.

Preferably, the diffuser and the mask also extend in the first direction, and the grooves extend in a direction perpendicular to the first direction, in a second direction.

If we take the vehicle as reference, the first direction would be a horizontal direction, perpendicular to the direction of movement of the vehicle, allowing in this way that the lighting module extends between the light disposed on the right side of the vehicle until the light disposed on the left side of the vehicle. Additionally, the second direction would be a vertical direction. Thus, the grooves allow opening the light beam in the horizontal direction.

This achieves, in a minimum volume occupied by the lighting module of the present invention, generating a surface illuminated with a high homogeneity.

### Brief description of the drawings

For a better understanding of all the aforementioned, drawings are attached wherein, schematically and only by way of non-limiting example, a practical embodiment has been represented.
Figure 1 is an elevational view of the rear part of a vehicle which includes the lighting module according to the present invention; and
Figure 2 is a sectional view of the lighting module according to the present invention.

### Description of a preferred embodiment

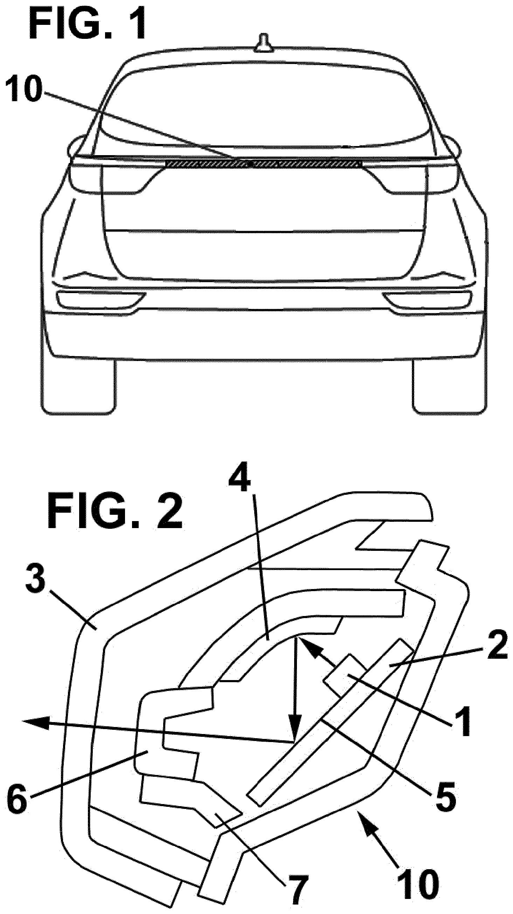

Figure 1 shows the rear part of a vehicle, comprising the lighting module according to the present invention, indicated in general by the reference number 10. Although it has been represented in this position in figure 1 by way of example, it is evident that the lighting module 10 of the present invention may be placed in any suitable position of the vehicle, for any lighting function. In the preferred example of the present invention, the lighting module 10 performs the rear position light signalling function and, in particular, lighting an elongated and narrow surface disposed between the right rear light and the left rear light.

Figure 2 is a cross-section of the lighting module 10 according to the present invention, comprising at least one light emitter 1, preferably a plurality of aligned light emitters, i.e. placed forming a straight line. For example, the or each light emitter 1 may be a light emitter diode (LED). For reasons of simplicity, in the present description we refer to the light emitter 1 in singular, but the lighting module 10 may also comprise a plurality of light emitters.

The lighting module 10 also comprises a printed circuit board 2, whereto the light emitter 1 is connected and an output surface 3 of the light generated by the light emitter 1.

The light from the light emitter 1 is reflected on a first reflection surface 4 and on a second reflection surface 5, where the first reflection surface 4 is configured to reflect the light emitted by the light emitter 1 towards the second reflection surface 5, and where the second reflection surface 5 is configured to reflect the light from the first reflection surface 4 towards the output surface 3, as can be observed in figure 2.

The trajectory of the light emitted by the light emitter 1 to its output through the output surface 3 is represented by means of the arrows of figure 2.

According to the present invention, it is the printed circuit board 2 that comprises the second reflection surface 5. In particular, the second reflection surface 5 is a surface of the actual printed circuit board 2. Thus, no additional elements are added, making use of the already existing ones to achieve an internal reflection of the light beams to achieve a homogeneity in the light emitted by the output surface 3.

The printed circuit board 2 comprises a first area and a second area. The first area comprises the at least one light emitter 1 and electronic components necessary to execute the lighting function. This first area is disposed close to the first reflection surface 4. In contrast, the second area, or area where the second reflection occurs, is free of electronic components. Particularly, it has a plurality of grooves in said second area. The second area is disposed adjacent to the first area of the printed circuit board 2, preferably in the area closest to the output surface 3.

According to the embodiment represented, this surface of the printed circuit board 2 is substantially flat, and extends in a plane substantially perpendicular to the light emission direction.

Furthermore, to provide suitable light reflection characteristics, the surface of the printed circuit board 2 is white, and may comprise a plurality of grooves, which are preferably substantially parallel to one another, so that they allow opening the light beam or light distribution field in a certain direction. The plurality of grooves has not been represented in the figures. According to the preferred embodiment, a groove would be disposed on the surface of the printed circuit board 2 just in the section represented in figure 2, i.e. extending from the lower area of the printed circuit board 2 to the light emitter 1. The groove would perform the function of an optic, allowing opening the field of the light beams reflected on the second reflection surface 5 in a horizontal plane.

For its part, as shown in figure 2, said first reflection surface 4 is facing said at least one light emitter 1, is substantially concave and also is white, optimizing the photometric characteristics necessary to achieve the objective of the present invention.

In the embodiment shown, the lighting module 10 according to the present invention also comprises a diffuser 6 disposed between the second reflection surface 5 and the output surface 3 and a mask 7 suitable for blocking a portion of the light generated by the at least one light emitter 1, the first reflection surface 4 being joined to the mask 7.

In the section presented it is observed how the diffuser 6 is disposed between two masks 7. The function of each mask is to avoid that it transmits light through them, allowing that the light beams are extracted from the lighting module 10 only through the diffuser 6, before traversing the output surface 3. Additionally, the lighting module 10 comprises a casing, which secures said plurality of components and, additionally, avoids the leak of light beams through the rear part of the lighting module 10, i.e. the area opposite to the diffuser 6.

To achieve a compact design, the distance between the light emitter 1 and the diffuser 6 is preferably between 10 and 25 mm in the output direction of the light from the lighting module 10. With such a reduced distance between the light emitter 1 and the diffuser 6, if the light beams were emitted directly against the diffuser 6, an observer would see a heterogeneous lighting in the output surface 3, i.e. with variations in the intensity. Thus, to achieve said homogeneity, the light beams are reflected on the first reflection surface 4 and on the second reflection surface 5 to increase the distance travelled by the light beams. Thus two diffuse reflections would occur, i.e. in all directions.

As previously indicated, preferably the lighting module 10 according to the present invention comprises a plurality of light emitters 1, which are disposed substantially aligned in the printed circuit board 2 along a first direction, and the first reflection surface 4, the second reflection surface 5 and the output surface 3 extend in said first direction, as do the diffuser 6 and the mask 7.

According to the embodiment represented, said first direction is substantially perpendicular to the output direction of the light reflected on the second reflection surface 5.

Thus, as can be seen in figure 1, the lighting module 10 extends in the first direction, i.e. along the width of the vehicle. It lights a substantially wide surface but with reduced height. With the configuration stated in the present invention it achieves that, despite having a plurality of light emitters 1 disposed aligned and at a very reduced distance from the output surface 3, an external observer views a homogeneously lit surface. As previously indicated, a lighting module 10 is obtained which is compact and less complex than conventional lighting modules, reducing the number of parts and allowing a better electronic integration.

Despite the fact that reference has been made to a specific embodiment of the invention, it is evident for a person skilled in the art that the lighting module described is susceptible to numerous variations and modifications and that all the details mentioned can be replaced by other technically equivalent ones, without departing from the scope of protection defined by the attached claims.

## Claims

1. Lighting module (10) for a vehicle, where the lighting module comprises:
- a plurality of light emitters (1);
- at least one printed circuit board (2), where the plurality of light emitters (1) is connected to
the at least one printed circuit board (2);
- an output surface (3) of the light generated by the plurality of light emitters(1);
- a first reflection surface (4) and a second reflection surface (5), wherein the at least one printed circuit board (2) comprises the second reflection surface (5),
**characterized in that**;
- the plurality of light emitters (1) is arranged substantially aligned in the at least one printed
circuit board (2) along a first direction so as to be able to perform in use the lighting of an elongated surface,
- wherein the first reflection surface (4) is a substantially concave surface facing the plurality of emitters and configured to direct light beams emitted by the plurality of light emitters (1) towards the second reflection surface (5),
- wherein the second reflection surface (5) is configured to reflect the light of the plurality of emitters (1) from the first reflection surface (4) towards the output surface (3), and
- wherein the first reflection surface (4), the second reflection surface (5) and the output surface (3) extend in the first direction, said first direction being substantially perpendicular to the output direction of the light reflected on the second reflection surface (5).

2. Lighting module (10) for a vehicle according to claim 1, wherein the second reflection surface (5) is a surface of the printed circuit board (2).

3. Lighting module (10) for a vehicle according to claim 2, wherein the surface of the printed circuit board (2) is substantially flat, where the surface of the printed circuit board (2) extends in a plane substantially perpendicular to the light emission direction.

4. Lighting module (10) for a vehicle according to any of claims 2 or 3, wherein the surface of the printed circuit board (2) is white.

5. Lighting module (10) for a vehicle according to any of claims 2 or 4, wherein the surface of the printed circuit board (2) comprises a plurality of grooves.

6. Lighting module (10) for a vehicle according to any of the preceding claims, wherein the first reflection surface (4) is facing said plurality of light emitters (1).

7. Lighting module (10) for a vehicle according to any of claims 1 or 6, wherein the first reflection surface (4) is white.

8. Lighting module (10) for a vehicle according to any of the preceding claims, wherein the lighting module comprises a diffuser (6) disposed between the second reflection surface (5) and the output surface (3).

9. Lighting module (10) for a vehicle according to claim 8, wherein the distance between the
at least one light emitter (1) of said plurality of light emitters (1)and the diffuser (6) is of between 10 and 25 mm in the output direction of the light from the lighting module.

10. Lighting module (10) for a vehicle according to any of the preceding claims, wherein the lighting module comprises a mask (7) suitable for blocking a portion of the light generated by the plurality of light emitters (1).

11. Lighting module (10) for a vehicle according to claim 10, wherein the first reflection surface (4) is joined to the mask (7).

12. Lighting module (10) for a vehicle according to claims 8 and 11, wherein the diffuser (6) and the mask (7) also extend in the first direction.

## Patentansprüche

1. Lichtmodul (10) für ein Fahrzeug, wobei das Lichtmodul Folgendes umfasst:
- eine Vielzahl von Lichtemittern (1);
- mindestens eine Leiterplatte (2), wobei die Vielzahl von Lichtemittern (1) mit der mindestens einen Leiterplatte (2) verbunden ist;
- eine Ausgabefläche (3) des Lichts, erzeugt durch die Vielzahl von Lichtemittern (1);
- eine erste Reflexionsfläche (4) und eine zweite Reflexionsfläche (5), wobei die mindestens eine Leiterplatte (2) die zweite Reflexionsfläche (5) umfasst, **dadurch gekennzeichnet, dass**:
- die Vielzahl von Lichtemittern (1) im Wesentlichen in der mindestens einen Leiterplatte (2) entlang einer ersten Richtung ausgefluchtet ist, um dazu in der Lage zu sein, bei Verwendung die Beleuchtung einer verlängerten Fläche durchzuführen,
- wobei die erste Reflexionsfläche (4) eine im Wesentliche konkave Fläche ist, die der Vielzahl von Emittern gegenüberliegt, und konfiguriert, um direkte Lichtstrahlen, emittiert von der Vielzahl von Lichtemittern (1), hin zur zweiten Reflexionsfläche (5) zu richten,
- wobei die zweite Reflexionsfläche (5) konfiguriert ist, um das Licht der Vielzahl von Emittern (1) von der erste Reflexionsfläche (4) hin zur Ausgabefläche (3) zu reflektieren, und
- wobei sich die erste Reflexionsfläche (4),die zweite Reflexionsfläche (5) und die Ausgabefläche (3) in die erste Richtung erstrecken, wobei die erste Richtung im Wesentlichen senkrecht zur Ausgaberichtung des Lichts, reflektiert auf die zweite Reflexionsfläche (5), ist.

2. Lichtmodul (10) für ein Fahrzeug nach Anspruch 1, wobei die zweite Reflexionsfläche (5) eine Fläche der Leiterplatte (2) ist.

3. Lichtmodul (10) für ein Fahrzeug nach Anspruch 2, wobei die Fläche der Leiterplatte (2) im Wesentlichen flach ist, wobei sich die Fläche der Leiterplatte (2) in einer Ebene erstreckt, die im Wesentlichen senkrecht zur Lichtemissionsrichtung ist.

4. Lichtmodul (10) für ein Fahrzeug nach einem der Ansprüche 2 oder 3, wobei die Fläche der Leiterplatte (2) weiß ist.

5. Lichtmodul (10) für ein Fahrzeug nach einem der Ansprüche 2 oder 4, wobei die Fläche der Leiterplatte (2) eine Vielzahl von Rillen umfasst.

6. Lichtmodul (10) für ein Fahrzeug nach einem der vorhergehenden Ansprüche, wobei die erste Reflexionsfläche (4) der Vielzahl von Lichtemittern (1) gegenüberliegt.

7. Lichtmodul (10) für ein Fahrzeug nach einem der Ansprüche 1 oder 6, wobei die erste Reflexionsfläche (4) weiß ist.

8. Lichtmodul (10) für ein Fahrzeug nach einem der vorhergehenden Ansprüche, wobei das Beleuchtungsmodul einen Diffusor (6) umfasst, der zwischen der zweiten Reflexionsfläche (5) und der Ausgabefläche (3) angeordnet ist.

9. Lichtmodul (10) für ein Fahrzeug nach Anspruch 8, wobei die Distanz zwischen dem mindestens einen Lichtemitter (1) der Vielzahl von Lichtemittern (1) und dem Diffusor (6) zwischen 10 und 25 mm in der Ausgaberichtung des Lichts aus dem Lichtmodul ist.

10. Lichtmodul (10) für ein Fahrzeug nach einem der vorhergehenden Ansprüche, wobei das Lichtmodul eine Maske (7) umfasst, die geeignet ist, um einen Abschnitt des Lichts, erzeugt durch die Vielzahl von Lichtemittern (1), zu blockieren.

11. Lichtmodul (10) für ein Fahrzeug nach Anspruch 10, wobei die erste Reflexionsfläche (4) mit der Maske (7) verbunden ist.

12. Lichtmodul (10) für ein Fahrzeug nach Anspruch 8 und 11, wobei sich der Diffusor (6) und die Maske (7) ebenfalls in die erste Richtung erstrecken.

## Revendications

1. Module d'éclairage (10) destiné à un véhicule, dans lequel le module d'éclairage comprend :
- une pluralité d'émetteurs de lumière (1) ;
- au moins une carte de circuit imprimé (2), dans lequel la pluralité d'émetteurs de lumière (1) est reliée à la au moins une carte de circuit imprimé (2) ;
- une surface de sortie (3) de la lumière générée par la pluralité d'émetteurs de lumière (1) ;
- une première surface de réflexion (4) et une seconde surface de réflexion (5), dans lequel la au moins une carte de circuit imprimé (2) comprend la seconde surface de réflexion (5),
**caractérisé en ce que** :
- les émetteurs de lumière (1) sont sensiblement alignés dans la au moins une carte de circuit imprimé (2) le long d'une première direction de façon à pouvoir assurer, pendant l'utilisation, l'éclairage d'une surface allongée,
- dans lequel la première surface de réflexion (4) est une surface sensiblement concave qui fait face à la pluralité d'émetteurs et est configurée pour orienter les faisceaux lumineux émis par la pluralité d'émetteurs de lumière (1) vers la seconde surface de réflexion (5),
- dans lequel la seconde surface de réflexion (5) est configurée pour réfléchir la lumière de la pluralité d'émetteurs (1) de la première surface de réflexion (4) vers la surface de sortie (3), et
- dans lequel la première surface de réflexion (4), la seconde surface de réflexion (5) et la surface de sortie (3) s'étendent dans la première direction, ladite première direction étant sensiblement perpendiculaire à la direction de sortie de la lumière réfléchie sur la seconde surface de réflexion (5).

2. Module d'éclairage (10) destiné à un véhicule selon la revendication 1, dans lequel la seconde surface de réflexion (5) est une surface de la carte de circuit imprimé (2).

3. Module d'éclairage (10) destiné à un véhicule selon la revendication 2, dans lequel la surface de la carte de circuit imprimé (2) est sensiblement plate, dans lequel la surface de la carte de circuit imprimé (2) s'étend sur un plan sensiblement perpendiculaire à la direction d'émission de la lumière.

4. Module d'éclairage (10) destiné à un véhicule selon l'une quelconque des revendications 2 ou 3, dans lequel la surface de la carte de circuit imprimé (2) est blanche.

5. Module d'éclairage (10) destiné à un véhicule selon l'une quelconque des revendications 2 ou 4, dans lequel la surface de la carte de circuit imprimé (2) comprend une pluralité de rainures.

6. Module d'éclairage (10) destiné à un véhicule selon l'une quelconque des revendications précédentes, dans lequel la première surface de réflexion (4) fait face à ladite pluralité d'émetteurs de lumière (1).

7. Module d'éclairage (10) destiné à un véhicule selon l'une quelconque des revendications 1 à 6, dans lequel la première surface de réflexion (4) est blanche.

8. Module d'éclairage (10) destiné à un véhicule selon l'une quelconque des revendications précédentes, dans lequel le module d'éclairage comprend un diffuseur (6) disposé entre la seconde surface de réflexion (5) et la surface de sortie (3).

9. Module d'éclairage (10) destiné à un véhicule selon la revendication 8, dans lequel la distance entre le au moins un émetteur de lumière (1) de ladite pluralité d'émetteurs de lumière (1) et le diffuseur (6) est comprise entre 10 et 25 mm dans la direction de sortie de la lumière depuis le module d'éclairage.

10. Module d'éclairage (10) destiné à un véhicule selon l'une quelconque des revendications précédentes, dans lequel le module d'éclairage comprend un masque (7) adapté pour bloquer une partie de la lumière générée par la pluralité d'émetteurs de lumière (1).

11. Module d'éclairage (10) destiné à un véhicule selon la revendication 10, dans lequel la première surface de réflexion (4) est jointe au masque (7).

12. Module d'éclairage (10) destiné à un véhicule selon les revendications 8 et 11, dans lequel le diffuseur (6) et le masque (7) s'étendent également dans la première direction.
